(19) **Europäisches Patentamt / European Patent Office / Office européen des brevets**

(11) **EP 4 488 815 A1**

(12) **EUROPEAN PATENT APPLICATION**
published in accordance with Art. 153(4) EPC

(43) Date of publication:
**08.01.2025 Bulletin 2025/02**

(21) Application number: **22934980.8**

(22) Date of filing: **30.12.2022**

(51) International Patent Classification (IPC):
**G06F 3/14** (2006.01)

(52) Cooperative Patent Classification (CPC):
**G06F 3/14**

(86) International application number:
**PCT/CN2022/143818**

(87) International publication number:
**WO 2023/185170 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 CN 202210322292**

(71) Applicant: **Shenzhen Yinwang Intelligent
Technologies Co., Ltd.
Shenzhen, Guangdong 518129 (CN)**

(72) Inventors:
• **WEI, Tong**
  **Shenzhen, Guangdong 518129 (CN)**
• **YU, Zhengjie**
  **Shenzhen, Guangdong 518129 (CN)**
• **XIA, Pei**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DISPLAY METHOD AND ELECTRONIC APPARATUS**

(57) A display method and an electronic apparatus are provided. The method includes: obtaining first information, where the first information includes at least one of road condition information for vehicle traveling and traveling state information of a vehicle; and controlling, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus. In this manner, when the vehicle shakes in a traveling process, the prompt information that is of the target object and that is seen by a driver does not deviate from the target object too much. This improves driving experience.

Obtain first information, where the first information includes at least one of road condition information for vehicle traveling and traveling state information of a vehicle — S1

Control, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus — S2

FIG. 4

**Description**

**CROSS-REFERENCE TO RELATED APPLICATIONS**

This application claims priority to Chinese Patent Application No. 202210322292.5, filed with the China National Intellectual Property Administration on March 29, 2022 and entitled "DISPLAY METHOD AND ELECTRONIC APPARATUS", which is incorporated herein by reference in its entirety.

**TECHNICAL FIELD**

This application relates to the field of vehicle technologies, and in particular, to a display method and an electronic apparatus.

**BACKGROUND**

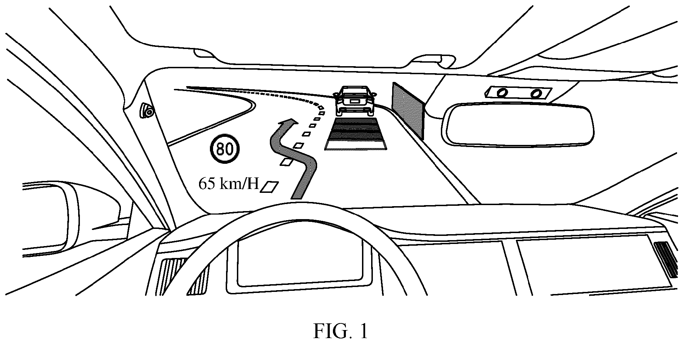

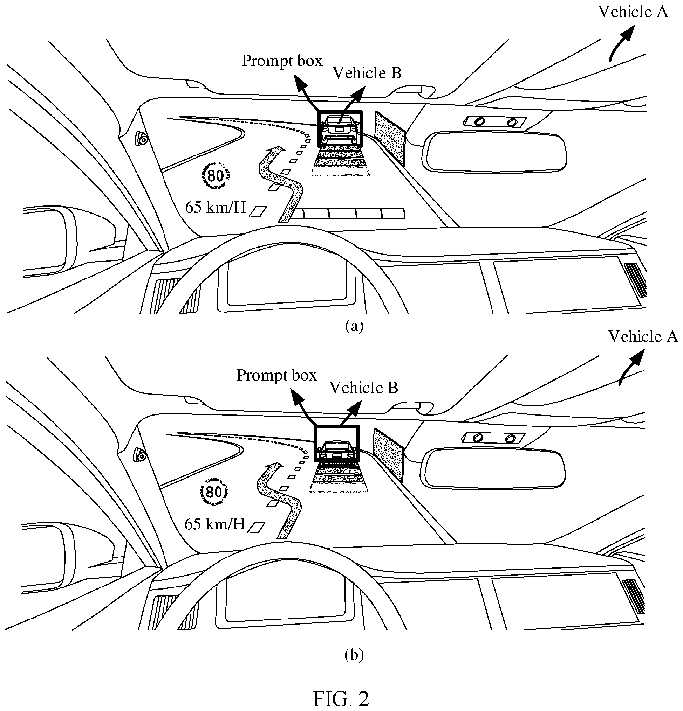

As shown in FIG. 1, a head-up display (head-up display, HUD) is a display apparatus that projects an image onto a forward field of view of a driver. In comparison with using a conventional instrument and a central control screen, the driver does not need to lower the head when viewing HUD images. This avoids switching between the images and a road surface, reduces crisis response time, and improves driving safety. In addition, an augmented reality head-up display (augmented reality HUD, AR-HUD) may fuse an HUD image with real road surface information, to enhance obtaining of the road surface information by the driver, and implement functions such as AR navigation and AR warning. For example, as shown in FIG. 2(a), a driver drives a vehicle A on a road. A windshield of the vehicle A displays a vehicle B that is in front of the vehicle A on the real road and a prompt box that marks the vehicle B, to give a warning to the driver.

However, in a daily driving process of the vehicle, due to uncertainty of a driving environment and a human factor, a vehicle body produces a specific range of shaking, and the shaking of the vehicle body causes the HUD to shake, and causes a displayed HUD image to shake. For example, as shown in FIG. 2(b), when the vehicle A driven by the driver encounters an obstacle (for example, a speed bump in front of the vehicle A), the vehicle A shakes. In this case, the HUD image (namely, the prompt box) in the windshield is displayed deviating from the vehicle B, and the deviation of the HUD image may cause the HUD image to be stacked with a vehicle in an actual environment. This deviation may make the driver feel unrealistic and may cause safety problems.

**SUMMARY**

An objective of this application is to provide a display method and an electronic apparatus, to reduce an image shake in a display process and improve a display effect.

According to a first aspect, a display method is provided, including: obtaining first information, where the first information includes at least one of road condition information for vehicle traveling and traveling state information of a vehicle; and controlling, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus. In other words, according to a technical solution provided in this application, when the vehicle shakes, a relative location relationship between prompt information of a target object in a windshield of the vehicle and the target object may be maintained as much as possible, to reduce a deviation possibility or a deviation degree, and therefore improve driving experience.

In a possible design, a shake direction of the vehicle is a first direction, a direction from a third location to the first location is a second direction, the second direction is opposite to the first direction, and the third location is a location at which the prompt information is displayed before the vehicle shakes.

In a possible design, the method further includes: before the vehicle shakes, displaying the prompt information at a third location in the display area; and the controlling, based on the first information when it is predicted that the vehicle is to shake, a display apparatus of the vehicle to display prompt information of a target object at a first location in a display area of the display apparatus when the vehicle shakes includes: when it is predicted that a shake direction of the vehicle is a first direction, controlling, based on the first information, the display apparatus of the vehicle to display the prompt information at the first location when the vehicle shakes, where a direction from the third location to the first location is a second direction, and the second direction is opposite to the first direction.

In other words, when the vehicle shakes towards the first direction, a location at which the prompt information of the target object is displayed moves towards the second direction opposite to the first direction, to avoid that the prompt information deviates from the target object because the vehicle shakes.

In a possible design, shake displacement of the vehicle is first displacement, displacement from a fourth location to the first location is second displacement, the second displacement is related to the first displacement, and the fourth location is a location at which the prompt information is displayed before the vehicle shakes.

In a possible design, the method further includes: before the vehicle shakes, displaying the prompt information at a fourth location in the display area; and the controlling, based on the first information when it is predicted that the vehicle is to shake, a display apparatus of the vehicle to display prompt information of a target object at a first location in a display area of the display apparatus when the vehicle shakes includes: when it is predicted that shake displacement of the vehicle is first displacement, controlling, based on the first information, the display apparatus of the vehicle to display the prompt information at the first location when the vehicle shakes, where displacement from the fourth location to the first location is second displacement, and the second displacement is related to the first displacement. For example, the second displacement is equal to the first displacement or is a multiple (0.5 times, 1.5 times, or the like) of the first displacement.

In other words, when the vehicle shakes by the first displacement, a location at which the prompt information of the target object is displayed deviates by the second displacement, to avoid that the prompt information deviates from the target object because the vehicle shakes.

In a possible design, the road condition information includes an obstacle size and/or an obstacle type, and the first location is determined based on the obstacle size and/or the obstacle type. For example, if the obstacle is a speed bump, and a height of the speed bump is 10 cm, the location at which the prompt information of the target object is displayed may deviate by about 10 cm, to compensate for a degree to which the prompt information of the target object deviates from a location of the target object in a viewing direction of a human eye due to a shake of the vehicle. In a possible design, the road condition information includes a geographical location of an obstacle, the first location is determined based on a first posture change amount, and the first posture change amount is a posture change amount generated by a historical shake of the vehicle or another vehicle at the geographical location. For example, a cloud stores a first posture change amount generated by a shake of a vehicle at a geographical location. When a vehicle A predicts that the vehicle is to shake, the vehicle A may query the cloud for the first posture change amount corresponding to the geographical location, and determine, based on the first posture change amount, a location at which prompt information of a target object is displayed. In this manner, the location at which the prompt information is displayed may be determined by using historical data, to reduce a calculation amount and improve efficiency.

In a possible design, the method further includes: when a quantity of times that the vehicle shakes at a same geographical location is greater than a first preset quantity of times, recording the geographical location and a posture change amount generated by a shake at the geographical location. In other words, when a vehicle shakes at a geographical location for a large quantity of times, the geographical location and a posture change amount may be reported to a cloud. In this case, when another vehicle or the current vehicle needs to pass the geographical location next time, the corresponding posture change amount may be directly queried from the cloud, to determine a location at which prompt information is displayed. In this manner, the location at which the prompt information is displayed may be determined by using historical data, to reduce a calculation amount and improve efficiency.

In a possible design, the traveling state information includes sensing information at a current moment, the sensing information at the current moment is used to predict a second vehicle body posture change amount generated by a shake of the vehicle, and the first location is determined based on the second vehicle body posture change amount. In other words, when the vehicle predicts that a shake is to occur, the vehicle may predict, based on the sensing information at the current moment, a posture change amount generated by the shake, to determine the location at which the prompt information is displayed when the vehicle shakes. In this manner, when the vehicle shakes, the prompt information of the target object in the windshield of the vehicle does not deviate from the target object too much. This improves driving experience.

In a possible design, the sensing information at the current moment is determined based on sensing information at a first moment and first duration, the first moment is earlier than the current moment, and the first duration is a transmission delay for the sensing information at the first moment.

It should be noted that sensing information has a transmission delay. For example, when a transmission delay is 3s and sensing information is read at 10:00, then sensing information at 09:57 is read. To be specific, historical sensing information is read. Therefore, the sensing information at the current moment may be determined based on the historical sensing information, to predict a posture change amount generated by the shake. In this manner, a predicted posture change amount generated by the shake of the vehicle is accurate.

In a possible design, the method further includes: controlling the display apparatus to cancel displaying navigation information or reduce transparency of the navigation information when the vehicle shakes, where the navigation information includes at least one of a direction indication, a current vehicle speed, a departure place, a destination, and a distance from a current location to the destination.

It should be noted that, when the vehicle shakes, if displaying the navigation information is not canceled, a driver may see that a display location of the navigation information in the windshield shakes. Such a shake may block an object in front or cause the driver to feel dizzy. Therefore, when the vehicle shakes, canceling displaying the navigation information or reducing the transparency of the navigation information may alleviate dizziness caused by the shake of the navigation information. This improves driving safety.

In a possible design, that it is predicted that the vehicle is to shake includes: detecting that there is an obstacle on a road ahead; and determining that a traveling route of the vehicle intersects an area in which the obstacle is located. For example, the vehicle may determine coordinates of an edge point of the obstacle by using an image recognition technology, determine the area in which the obstacle is located based on the coordinates, determine a forward route of the vehicle, determine whether the forward route intersects with the area in which the obstacle is located, and if the forward route intersects with the area in which the obstacle is located, determine that a shake is to occur. In this manner, it can be predicted in advance that the vehicle is to shake, that is, preparation is made in advance.

In a possible design, the road condition information includes information about an obstacle, and the obstacle includes a speed bump and/or a ditch. It should be understood that the obstacle may alternatively be another object. Examples are not provided in this application.

According to a second aspect, an electronic apparatus is further provided, including:

an obtaining module, configured to obtain first information, where the first information includes at least one of road condition information for vehicle traveling and traveling state information of a vehicle; and
a processing module, configured to: control, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus.

In a possible design, a shake direction of the vehicle is a first direction, a direction from a third location to the first location is a second direction, the second direction is opposite to the first direction, and the third location is a location at which the prompt information is displayed before the vehicle shakes.

In a possible design, the processing module is further configured to: before the vehicle shakes, control the prompt information to be displayed at a third location in the display area; and when it is predicted that a shake direction of the vehicle is a first direction, control, based on the first information, the display apparatus of the vehicle to display the prompt information at the first location when the vehicle shakes, where a direction from the third location to the first location is a second direction, and the second direction is opposite to the first direction.

In a possible design, shake displacement of the vehicle is first displacement, displacement from a fourth location to the first location is second displacement, the second displacement is related to the first displacement, and the fourth location is a location at which the prompt information is displayed before the vehicle shakes.

In a possible design, the processing module is further configured to: before the vehicle shakes, control the prompt information to be displayed at a fourth location in the display area; and when it is predicted that shake displacement of the vehicle is first displacement, control, based on the first information, the display apparatus of the vehicle to display the prompt information at the first location when the vehicle shakes, where displacement from the fourth location to the first location is second displacement, and the second displacement is related to the first displacement.

In a possible design, the road condition information includes an obstacle size and/or an obstacle type, and the first location is determined based on the obstacle size and/or the obstacle type.

In a possible design, the road condition information includes a geographical location of an obstacle, the first location is determined based on a first posture change amount, and the first posture change amount is a posture change amount generated by a historical shake of the vehicle or another vehicle at the geographical location.

In a possible design, the processing module is further configured to: when a quantity of times that the vehicle shakes at a same geographical location is greater than a first preset quantity of times, record the geographical location and a posture change amount generated by a shake at the geographical location.

In a possible design, the traveling state information includes sensing information at a current moment, the sensing information at the current moment is used to predict a second vehicle body posture change amount generated by a shake of the vehicle, and the first location is determined based on the second vehicle body posture change amount.

In a possible design, the sensing information at the current moment is determined based on sensing information at a first moment and first duration, the first moment is earlier than the current moment, and the first duration is a transmission delay for the sensing information at the first moment.

In a possible design, the processing module is further configured to: control the display apparatus to cancel displaying navigation information or reduce transparency of the navigation information when the vehicle shakes, where the navigation information includes at least one of a direction indication, a current vehicle speed, a departure place, a destination, and a distance from a current location to the destination.

According to a third aspect, an electronic apparatus is further provided, including a processor, where the processor is connected to a memory, the memory stores a computer program or instructions, and the processor is configured to execute the computer program or the instructions stored in the memory, so that the computing device performs the method according to the first aspect.

For example, the electronic apparatus may be a transportation means such as various types of vehicles. Alternatively, the electronic apparatus may be a vehicle-mounted apparatus. For example, the electronic apparatus may be integrated with a vehicle. For example, the electronic apparatus may be disposed inside the vehicle. Alternatively, the electronic apparatus and the vehicle may be disposed separately. For example, the electronic apparatus may be implemented in a form of a terminal device or the like. The terminal device herein may be, for example, an AR-HUD or a vehicle-mounted device. Alternatively, the electronic apparatus may be a processing apparatus, for example, a processing chip or a processor. A form of the electronic apparatus is not limited in this application, and the electronic apparatus may be any software or hardware module that can implement the foregoing method.

According to a fourth aspect, a vehicle is further provided, including a processor, where the processor is connected to a memory, the memory stores a computer program or instructions, and the processor is configured to execute the computer program or the instructions stored in the memory, so that the computing device performs the method according to the first aspect.

According to a fifth aspect, a vehicle is further provided, including: an obtaining module, configured to obtain first information, where the first information includes at least one of road condition information for vehicle traveling and traveling state information of a vehicle; and a processing module, configured to: control, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus.

According to a sixth aspect, a computer-readable storage medium is further provided, where the computer-readable storage medium stores a computer program or instructions, and when the computer program or the instructions are executed by a computing device, the computing device is enabled to perform the method provided in the first aspect.

According to a seventh aspect, a computer program product is further provided, including a computer program, where when the computer program is run on a computer, the computer is enabled to perform the method according to the first aspect.

According to an eighth aspect, a chip or a chip system is further provided, including at least one processor and an interface, where the interface is configured to provide a computer program, instructions, or data for the at least one processor, and the at least one processor is configured to execute the computer program or the instructions, so that the method provided in the first aspect is performed.

For beneficial effects of the second aspect to the eighth aspect, refer to beneficial effects the first aspect. Details are not described again.

## BRIEF DESCRIPTION OF DRAWINGS

FIG. 1 is a diagram of an application scenario according to an embodiment of this application;
FIG. 2 is a diagram in which an HUD image shakes according to an embodiment of this application;
FIG. 3 is a diagram in which an HUD image is stably displayed according to an embodiment of this application;
FIG. 4 is a flowchart of a display method according to an embodiment of this application;
FIG. 5 is a diagram in which it is predicted that a shake is to occur according to an embodiment of this application;
FIG. 6 is another diagram in which it is predicted that a shake is to occur according to an embodiment of this application;
FIG. 7 and FIG. 8 are diagrams of a display location of an HUD image according to an embodiment of this application;
FIG. 9 is a diagram of time alignment of sensor information according to an embodiment of this application;
FIG. 10 is a diagram of an in-vehicle infotainment system according to an embodiment of this application;
FIG. 11 is a diagram of a structure of an electronic apparatus according to an embodiment of this application; and
FIG. 12 is another diagram of a structure of an electronic apparatus according to an embodiment of this application.

## DESCRIPTION OF EMBODIMENTS

This application provides a display method and an electronic apparatus, to reduce a shake of an HUD image and improve a display effect. The method and the apparatus are based on a same technical concept. Because problem-resolving principles of the method and the apparatus are similar, mutual reference may be made to implementations of the apparatus and the method, and repeated descriptions are not described again.

The display method provided in embodiments of this application may be performed by the electronic apparatus.

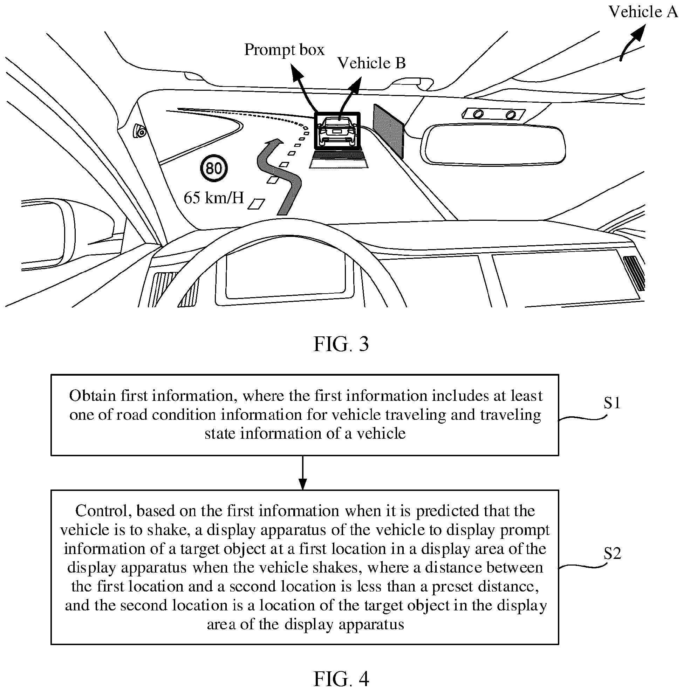

When the electronic apparatus predicts that a vehicle is to shake, the electronic apparatus may obtain first information, where the first information includes at least one of road condition information and traveling state information. The electronic apparatus controls, based on the first information, a display apparatus to display prompt information of a target object at a first location when the vehicle shakes, where a distance between the first location and a second location is less than a preset distance, and the second location is a corresponding location of the target object in a windshield of the vehicle when the vehicle shakes. According to this method, when the vehicle shakes, it can be ensured that a display location of the prompt information of the target object does not deviate too much from the corresponding location of the target object in the windshield, to reduce a shake of an image, ensure stable displaying of the image, and improve a display effect. For example, FIG. 2(b) is still used as an example. The vehicle A shakes due to the obstacle. As a result, the driver of the vehicle A sees that the prompt box deviates from the vehicle B. As shown in FIG. 3, according to the display method provided in this application, the vehicle A shakes when passing through the obstacle. However, on the windshield of the vehicle A, the prompt box of the vehicle B can still circle the vehicle B. In this manner, an HUD image is better fused with real road surface information, and a sense of reality is strong.

Optionally, the electronic apparatus may be a transportation means, for example, vehicles of various types. Alternatively, the electronic apparatus may be a vehicle-mounted apparatus. For example, the electronic apparatus may be integrated with the vehicle. For example, the electronic apparatus may be disposed inside the vehicle. Alternatively, the electronic apparatus and the vehicle may be disposed separately. For example, the electronic apparatus may be implemented in a form of a terminal device or the like. The terminal device herein may be, for example, a vehicle-mounted device like an AR-HUD or a head unit. Alternatively, the electronic apparatus may be a processing apparatus, for example, a processing chip or a processor. For example, when the electronic apparatus is a processing apparatus, the electronic apparatus may be disposed inside an AR HUD, or may be disposed inside another vehicle-mounted apparatus. For example, the electronic apparatus is a processor in a head unit. For example, the electronic apparatus is disposed inside another vehicle-mounted apparatus. The vehicle-mounted apparatus may communicate with an AR HUD in a wired or wireless manner. In addition, it should be understood that, based on an actual use requirement, the vehicle may alternatively be replaced with another carrier or transportation means like a train, an aircraft, or a mobile platform. This is not limited in this application. The following uses a vehicle as an example.

The following describes the display method in this application in detail with reference to accompanying drawings.

FIG. 4 is a flowchart of a display method according to an embodiment of this application. The method may be executed by an electronic apparatus. For the electronic apparatus, refer to the foregoing description. As shown in FIG. 4, the procedure includes the following steps.

S1: Obtain first information, where the first information includes at least one of road condition information for vehicle traveling and traveling state information of a vehicle.

For example, the road condition information includes at least one type of information such as a size, a type, and a geographical location of an obstacle. The size, the type, and the like of the obstacle may be determined by using an image recognition technology. The geographical location of the obstacle may be determined by using a GPS or a traveling route.

For example, the traveling state information includes sensing information, and the sensing information includes at least one of a speed, an angular velocity, an acceleration, and an angular acceleration.

Optionally, the electronic apparatus may further perform step S0 (not shown in the figure).

S0: Predict that the vehicle is to shake.

It should be noted that an execution sequence of S1 and S0 is not limited in this application. S1 may be performed before S0, or S0 may be performed before S1, or S1 and S0 are performed simultaneously, or the like. It should be understood that, generally, when an obstacle appears on a road on which the vehicle travels, the vehicle may shake because the vehicle presses over the obstacle. For example, when obstacles such as a speed bump, a ditch, a vehicle, a roadblock, and a small stone appears on a road on which the vehicle travels, the vehicle shakes when passing through the obstacles. Therefore, for example, the obstacle includes one or more of different types of obstacles such as a speed bump, a ditch, a vehicle ahead, a roadblock, and a stone. This is not limited in this application.

In an implementation, in a traveling process of the vehicle, the electronic apparatus detects whether an obstacle appears on a road ahead. If the electronic apparatus detects that the obstacle appears on the road ahead, the electronic apparatus predicts that the vehicle is to shake. For example, a camera in the front of a vehicle head may capture an image, and the electronic apparatus detects, by using an image recognition technology, whether there is an obstacle on the road ahead.

In another possible implementation, in a traveling process of the vehicle, the electronic apparatus detects whether there is an obstacle on a road ahead. If the electronic apparatus detects that there is the obstacle on the road ahead, the electronic apparatus determines, based on a forward route of the vehicle, whether the vehicle is to collide with the obstacle. If the vehicle determines that the vehicle is to collide with the obstacle, the electronic device determines that the vehicle is to shake. In this manner, it can be more accurately determined whether the vehicle is to shake. Before it is determined, based on the forward route of the vehicle, whether the vehicle is to collide with the obstacle, the forward route of the vehicle further needs to be determined first. The forward route of the vehicle may be determined in a plurality of manners. For example, the forward route may be determined based on a vehicle head direction. For example, if the vehicle head direction is left front, the forward route is a left front route. For another example, the forward route may be alternatively determined based on a travel route that is from a current location to a destination address and that is formed on a map. After the forward route is determined, the electronic apparatus determines, based on the forward route, whether the vehicle is to collide with the obstacle. For example, when the forward route intersects an area in which the obstacle is located, it is determined that the forward route is to collide with the obstacle. The area in which the obstacle is located may be obtained by using an image recognition technology. For example, coordinates of a plurality of edge points of the obstacle are determined by using the image recognition technology. The coordinates are coordinates in a camera coordinate system, and may be converted into coordinates in an in-vehicle infotainment coordinate system. After the coordinates are converted into the coordinates in the in-vehicle infotainment coordinate system, an edge contour of the obstacle may be determined by using the coordinates of the plurality of edge points, to obtain the area in which the obstacle is located.

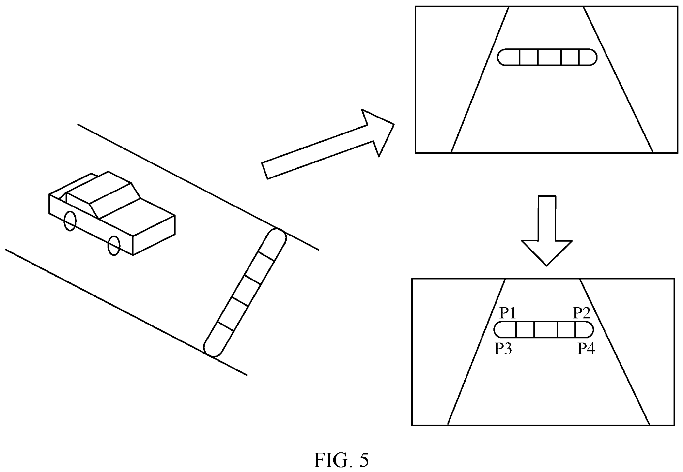

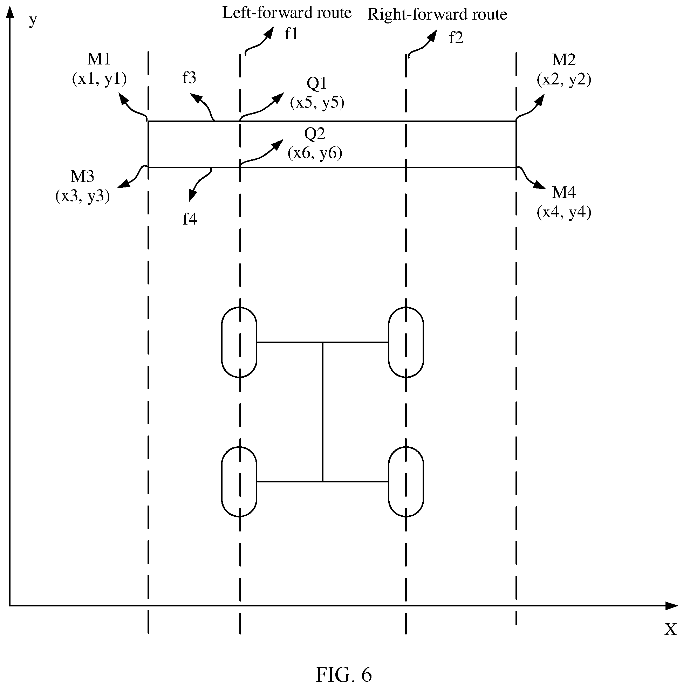

For ease of understanding, with reference to FIG. 5 and FIG. 6, the following describes, by using the speed bump as an example, steps of predicting, by the electronic apparatus, that the vehicle is to shake. Specifically, the method includes: Step 1: Detect that there is a speed bump on a road ahead. Step 2: Determine coordinates, in the image coordinate system, of four points on the speed bump. For example, the four points are respectively P1, P2, P3, and P4. It should be noted that the four points are used as an example herein. During actual application, more or fewer points may be included, and the point may be any point like an edge point on the speed bump. Step 3: Convert the coordinates of the four points in the image coordinate system into coordinates in the in-vehicle infotainment coordinate system. It should be understood that the image coordinate system and the in-vehicle infotainment coordinate system are different coordinate systems. To facilitate calculation, coordinate systems need to be unified. For example, the image coordinate system may be calibrated in the in-vehicle infotainment coordinate system. A calibration process may be performed before or after delivery. The calibration process is obtaining a coordinate conversion matrix for converting from the image coordinate system to the in-vehicle infotainment coordinate system, and coordinates in the image coordinate system may be converted into coordinates in the in-vehicle infotainment coordinate system based on the coordinate conversion matrix. For example, the four points P1, P2, P3, and P4 in the image coordinate system are converted to corresponding M1, M2, M3, and M4 in the in-vehicle infotainment coordinate system, as shown in FIG. 6. Step 4: Determine a forward route of the vehicle. The forward route of the vehicle includes a forward route of a left wheel and/or a forward route of a right wheel, as shown in FIG. 6. Step 5: Determine, based on the forward route, M1, M2, M3, and M4, whether a shake is to occur. For example, a left-forward route is represented by f1, and a right-forward route is represented by f2. M1 and M2 may be used to determine a curve of an upper edge of the speed bump, and the curve is represented by f3. M3 and M4 may be used to determine a curve of a lower edge of the speed bump, and the curve is represented by f4. Therefore, there are four curves, namely, f1, f2, f3, and f4. If f1 intersects with at least one of f3 and f4, and/or f2 intersects with at least one of f3 and f4, it is determined that the vehicle is to shake. For example, it is determined whether f1 intersects with f3. When the following formula is met, it is determined that f1 intersects with f3. The formula includes:

$$(x_1 - x_5)(x_2 - x_5) > 0$$

Herein, $x_1$ is a horizontal coordinate of the point M1 on the speed bump, $x_2$ is a horizontal coordinate of the point M2 on the speed bump, and $x_5$ is a horizontal coordinate obtained when y1, y2, or an average value of y1 and y2 is taken as a vertical coordinate of the curve f1.

For example, it is determined whether f1 intersects with f4. When the following formula is met, it is determined that f1 intersects with f4. The formula includes:

$$(x_3 - x_6)(x_4 - x_6) > 0$$

Herein, $x_3$ is a horizontal coordinate of the point M3 on the speed bump, $x_4$ is a horizontal coordinate of the point M4 on the speed bump, and $x_6$ is a horizontal coordinate obtained when y3, y4, or an average value of y3 and y4 is taken as a vertical coordinate of the curve f1.

The foregoing uses determining whether f1 intersects with f3 as an example. A principle of determining whether f1 intersects with f4, and a principle of determining whether f2 intersects with f3 and/or f4 are the same as the foregoing principle. To shorten a length of the specification, details are not described again.

S2: Control, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus.

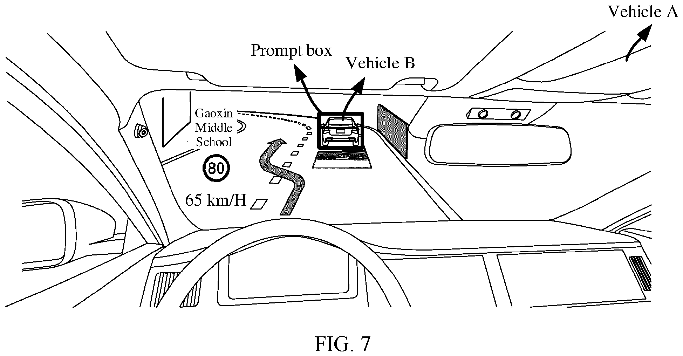

FIG. 3 is used as an example. The target object is the vehicle B, and the prompt information of the target object is the prompt box. When the vehicle A shakes, a distance between a prompt box and the vehicle B on a display area (for example, the windshield) of the vehicle A is less than the preset distance. The distance between the prompt box and the vehicle B on the windshield may be a distance between a center point of the prompt box and a center point of the vehicle B. For example, the target object may alternatively be another object, for example, a building like a hospital or a school on a driving road. A distance between prompt information of the building and the building on the windshield of the vehicle is less than the preset distance. As shown in FIG. 7, a distance between prompt information "Gaoxin Middle School" of a school and the school on the windshield of the vehicle A is small. In this way, when the vehicle shakes, an image may be stably integrated with a real environment, and driving experience is good.

Optionally, before the vehicle shakes, the electronic apparatus controls the prompt information of the target object to be displayed at a third location in the display area. When the electronic apparatus predicts that a shake direction of the vehicle is a first direction, the electronic apparatus controls, based on the first information, the display apparatus of the vehicle to display the prompt information of the target object at the first location when the vehicle shakes, where a direction from the third location to the first location is a second direction, and the second direction is opposite to the first direction. In other words, it is assumed that the prompt information of the target object in the windshield of the vehicle is at a location 1 before a shake, and the prompt information is at a location 2 when the shake occurs. A relative relationship between the location 2 and the location 1 is related to a vehicle shake direction. For example, the vehicle shake direction is a first direction, a direction from the location 1 to the location 2 is a second direction, and the second direction is opposite to the first direction.

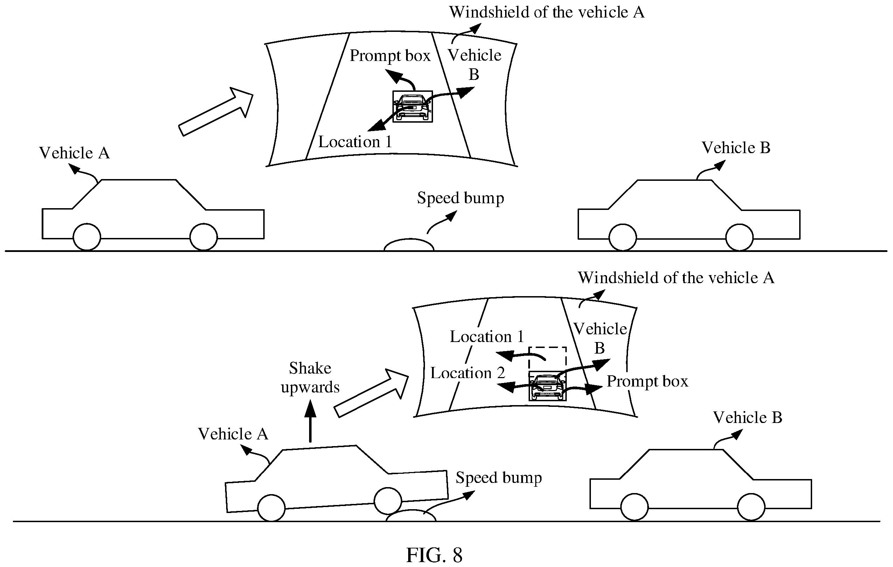

For example, refer to FIG. 8. A vehicle A and a vehicle B travel on a road, and the vehicle B is in front of the vehicle A. Before the vehicle A passes through a speed bump, prompt information of the vehicle B on a windshield is displayed at a location 1. When the vehicle A passes through the speed bump, because the vehicle A shakes upwards, a location of the vehicle B in the windshield of the vehicle A moves downwards. Correspondingly, the prompt information of the vehicle B moves downwards, that is, moves from the location 1 (dotted line) to the location 2 (solid line).

Optionally, before the vehicle shakes, the electronic apparatus controls the prompt information of the target object to be displayed at a fourth location in the display area. When it is predicted that shake displacement of the vehicle is first displacement, the display apparatus of the vehicle is controlled, based on the first information, to display the prompt information at the first location when the vehicle shakes, where displacement from the fourth location to the first location is second displacement, and the second displacement is related to the first displacement. In other words, the prompt information of the target object in the windshield of the vehicle is originally at a location 1 before a shake, and the prompt information is at a location 2 when the shake occurs. A relative relationship between the location 2 and the location 1 is related to vehicle shake displacement. For example, the shake displacement of the vehicle is the first displacement, and the second displacement from the location 1 to the location 2 is related to the first displacement. The second displacement being related to the first displacement includes that the second displacement is the same as the first displacement, or the second displacement is obtained by scaling down or scaling up the first displacement proportionally. For example, the second displacement is 1.5 times or 0.5 times of the first displacement.

For example, the second displacement is equal to the first displacement. Still refer to FIG. 8. If the vehicle A moves upward by a displacement amount like 10 cm when passing through the speed bump, the prompt information of the vehicle B in the windshield of the vehicle A is moved downward by 10 cm, that is, the location 2 is moved downward by 10 cm compared with the location 1.

Therefore, in this manner, an image shake is compensated, so that the image is stably displayed, and driving experience is improved.

The following describes an implementation process of S2.

Optionally, S2 may include: Determine the first location based on the first information, and control the display apparatus to display the prompt information of the target object at the first location when the vehicle shakes. The first location may be determined based on road condition information for vehicle traveling, and the road condition information may include at least one of an obstacle size, an obstacle type, and a geographical location of the obstacle. Alternatively, the first location may be determined based on traveling state information of the vehicle. For example, a vehicle body posture change amount generated by the shake of the vehicle is predicted based on the traveling state information of the vehicle, and the first location is determined based on the predicted vehicle body posture change amount.

For ease of understanding, the following provides several examples of determining the first location in different cases.

Case 1: For example, the first information includes the road condition information, and the first location is determined based on the road condition information.

For example, the case 1 includes but is not limited to the following manner A and manner C. It should be noted that the manner A to the manner C are examples of determining the first location based on the road condition information. In a specific implementation process, another manner may be alternatively used. This is not limited in this application.

Manner A: The road condition information includes a size of the obstacle, and the electronic apparatus determines the first location based on the size of the obstacle.

For example, a speed bump is used as an example, the electronic apparatus may determine a height of the speed bump by using an image recognition technology. For example, the height is 10 cm (the value is only an example, and does not constitute a limitation on the size). In this case, the electronic apparatus shifts an original location of the prompt information of the target object downward by 10 cm to obtain the first location. For example, refer to FIG. 8. The original location is the location 1, and the location 1 is decreased by 10 cm to obtain the location 2, where the location 2 is the first location. Therefore, when the vehicle shakes upwards due to a protruding obstacle, because the windshield moves upwards, a location of the target object in a real environment in the windshield descends. To prevent the prompt information of the target object in the windshield from being too deviated from the target object, the location of the prompt information also descends. In other words, even if the vehicle shakes upwards, the prompt information is still stably displayed near the target object. This improves driving experience.

For another example, a ditch on a road is used as an example, the electronic apparatus may determine a depth of the ditch by using an image recognition technology. For example, the depth is 10 cm. In this case, the electronic apparatus shifts the original location of the prompt information of the target object upward by 10 cm to obtain the first location. Therefore, when the vehicle shakes down due to a sunken obstacle, because the windshield is moved down, a location of the target object in the windshield in a real environment rises. To prevent the prompt information of the target object in the windshield from being too deviated from the target object, the location of the prompt information also rises. In other words, even if the vehicle shakes downwards, the prompt information is still stably displayed near the target object. This improves driving experience.

Manner B: The road condition information includes the obstacle type. The electronic apparatus determines the first location based on a type of the obstacle.

For example, the type of the obstacle is a speed bump. The electronic apparatus may query, based on the type of the obstacle, a vehicle body posture change amount corresponding to the type of the obstacle, and then determine the first location based on the vehicle body posture change amount. The posture change amount may be a change amount of a posture angle of the vehicle, and the posture angle includes at least one of a yaw angle, a pitch angle, and a roll angle. Vehicle body posture change amounts corresponding to different types of obstacles may be stored in the vehicle or a cloud. For example, a vehicle body posture change amount corresponding to a type of an obstacle like a speed bump is that the pitch angle of the vehicle increases to make a vehicle head move upwards by 10 cm. In this case, the electronic apparatus determines the first location based on that the vehicle head move upwards by 10 cm. A principle of determining the first location is the same as that in the manner B, and details are not described again.

It should be noted that the manner A and the manner B may be used separately or in combination. A combination of the manner A and the manner B is used as an example. A possible implementation includes: first determining a size of an obstacle in the manner A, and if the size fails to be determined, using the manner B; or first determining a type in the manner B, and if the type cannot be identified, using the manner A.

Manner C: The road condition information includes the geographical location of the obstacle. The electronic device determines, based on the geographical location, a posture change amount obtained by a historical shake of the vehicle or another vehicle at the geographical location, and determines the first location based on the posture change amount.

In some embodiments, when the vehicle A shakes at a geographical location or when a quantity of times of shaking at the location is greater than a preset quantity of times, the vehicle A records the geographical location and a posture change amount generated by a shake at the geographical location. When the vehicle A needs to pass the same geographical location next time, a posture change amount corresponding to the geographical location is queried, and the first location is determined based on the posture change amount. In this manner, the vehicle may record a historical geographical location at which the vehicle shakes, to ensure that when the vehicle passes the same geographical location next time, a corresponding vehicle body posture change amount may be directly queried to adjust a display location of the prompt information of the target object. Because the vehicle only needs to query a historical record to determine the display location of the prompt information, efficiency is high.

In some other embodiments, when the vehicle A shakes at a geographical location or when a quantity of times of shaking at the location is greater than a preset quantity of times, the vehicle A records the geographical location and a posture change amount generated by a shake at the geographical location, and reports the geographical location and the posture change amount to the cloud. After determining the geographical location of the obstacle, the vehicle B queries, from the cloud, the posture change amount corresponding to the geographical location, and determines the first location based on the posture change amount. In other words, a correspondence that is between a geographical location and a posture change amount and that is stored in the cloud may be shared with each vehicle. In this manner, even if the vehicle B does not pass the geographical location in history, the posture change amount corresponding to the geographical location may be queried, to adjust the display location of the prompt information of the target object. Certainly, for a same geographical location, posture change amounts are different when different models of vehicles shake. Therefore, the cloud stores the change posture amounts corresponding to the different models of vehicles at the same geographical location. When the vehicle B needs to pass the geographical location, the vehicle B reports a model of the vehicle B to the cloud, queries a posture change amount generated by a shake of another vehicle of the same model at the geographical location, and determines the first location based on the posture change amount.

Case 2: For example, the first information includes the traveling state information of the vehicle, and the first location is determined based on the traveling state information.

For example, the traveling state information includes sensing information, and the electronic apparatus determines, based on the sensing information, a vehicle body posture change mount generated by a shake of the vehicle, and determines the first location based on the vehicle body posture change amount. The sensing information includes at least one of a speed, an angular velocity, an acceleration, and an angular acceleration. The angular velocity is used as an example, an inertia measurement unit (inertial measurement unit, IMU) on the vehicle includes an accelerometer, a gyroscope, and the like, which may be used to detect the angular velocity.

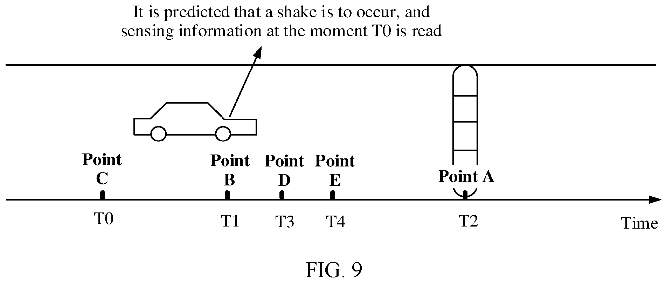

It should be noted that, as shown in FIG. 9, a vehicle travels on a road. It is assumed that the vehicle arrives at a point C at a moment T0, and an IMU collects current sensing information. At the moment T1, the vehicle moves to a point B, and it is predicted that the vehicle is to shake. In this case, an electronic apparatus starts to read sensing information at the moment T1. Because of a transmission delay, the sensing information read at the moment T1 is the sensing information at the moment T0. For example, it is assumed that the transmission delay is 3s, and the moment T1 is 10:00s, the sensing information read at the moment T1 is sensing information of 9:57s. To accurately determine a first location, the electronic apparatus may predict, based on the sensing information at the moment T0, sensing information at a moment (namely, a moment T2 in FIG. 9) obtained when a shake occurs, then determine, based on the sensing information at the moment T2, a vehicle body posture change amount obtained when the vehicle shakes, and determine, based on the vehicle body posture change amount, the first location used to display prompt information of a target object.

The following describes a process in which the electronic apparatus predicts, based on the sensing information at the moment T0, the sensing information at the moment (namely, the moment T2 in FIG. 9) at which the shake occurs.

In an implementation, the electronic apparatus may perform time alignment on the sensing information at the moment T0. The time alignment may be understood as: determining the sensing information at the moment T1 based on the sensing information at the moment T0 and a preset algorithm, that is, compensating for the transmission delay. The preset algorithm is described below. In other words, even if the sensing information at the moment T0 is read at the moment T1 due to the transmission delay, the sensing information at the moment T1 may also be obtained by performing time alignment on the sensing information at the moment T0. After the sensing information at the T1 moment is obtained, sensing information at a moment T2 may be predicted based on the sensing information at the moment T1.

The preset algorithm used to perform time alignment on the sensing information at the moment T0 to obtain the sensing information at the moment T1 may be a Kalman filtering algorithm or another algorithm. The Kalman filtering algorithm is used as an example, and a pitch angular velocity x at the moment T1 is predicted by using a pitch angular velocity at the moment T0 by using the Kalman filtering algorithm. It is assumed that:

$$X_T = \begin{bmatrix} x_T \\ \dot{x}_T \end{bmatrix}$$

Herein, $x_T$ represents a fused angular velocity of a pitch angle at the moment T0, $\dot{x}_T$ represents a change speed of an angular velocity at the moment T0, and $X_T^-$ represents a predicted value at the moment T1, where the predicted value is a pitch angular velocity at the moment T1.

It should be noted that, the current moment is the moment T1, but data read at the current moment is IMU data at the moment T0. Therefore, there are two groups of IMU data at the moment T0 in the electronic apparatus. One group is the read IMU data, and the other group is predicted IMU data at the moment T0. It should be understood that the IMU data at the moment T0 is predicted before the moment T0. For example, the IMU data at the moment T0 is predicted by using a same algorithm before the moment T0. For ease of understanding, the read IMU data at the moment T0 is referred to as measurement data, and the IMU data at the moment T0 predicted before the moment T0 is referred to as predicted data.

In some embodiments, the Kalman filtering algorithm may include two steps. Step 1: Correct the predicted data at the moment T0 by using the measurement data at the moment T0. This may also be understood as updating the IMU data at the moment T0. Step 2: After the IMU data at the moment T0 is updated, predict IMU data at the current moment (namely, the moment T1) by using the updated IMU data at the moment T0. The first step is also referred to as an update phase, and the second step is also referred to as a prediction phase.

In the update phase, the predicted data at the moment T0 is corrected by using the measurement data at the moment T0. A correction algorithm is as follows:

$$K_{T0} = P_{T0}^- H^T (H P_{T0}^- H^T + R)^{-1}$$

$$X_{T0} = X_{T0}^- + K_{T0}\left(\begin{bmatrix} Z_{T0} \\ 0 \end{bmatrix} - HX_{T0}^-\right)$$

$$P_{T0} = (I - K_{T0}H)P_{T0}^-$$

Herein, H is a transformation matrix, for example, is an identity matrix in this embodiment; R is an observation noise covariance matrix, and may be a diagonal matrix, for example, a diagonal matrix with a diagonal element of 0.01; $P_{T0}^-$ is a covariance matrix at the moment T0 that is used to perform prediction by using data at a previous moment of the moment T0; $K_{T0}$ is a Kalman gain, and represents a weight of a predicted value and a measurement value in a calculation process of $X_{T0}$; $z_{T0}$ is a measured value at the moment T0; $X_{T0}^-$ is the IMU data that is at the moment T0 and that is obtained through prediction at the previous moment; and $P_{T0}$ is a covariance matrix at the current moment.

In the prediction phase, after the IMU data at the moment T0 is updated, the IMU data at the moment T1 is predicted by using the updated IMU data at the moment T0:

$$X_{T1}^- = AX_{T0} + B\boldsymbol{u}_{T0}$$

$$P_{T1}^- = AP_{T0}A^T + Q$$

$$A = \begin{bmatrix} 1 & T1 - T0 \\ 0 & 1 \end{bmatrix}$$

Herein, A is a state transition matrix; $B\boldsymbol{u}_{T0}$ is set to zero; Q is a process noise covariance matrix, and may be a diagonal matrix, for example, a diagonal matrix with a diagonal element of 0.01; $P_{T1}^-$ is a predicted covariance matrix at T1, and is used for calculation in a next update phase; and $X_{T1}^-$ is the predicted IMU data at the moment T1.

The foregoing uses the Kalman filtering algorithm as an example to describe how to perform time alignment on the IMU data at the moment T0 to obtain the IMU data at the moment T1. It may be understood that, in addition to the foregoing Kalman filtering algorithm, another algorithm for example, a particle filtering algorithm or an extended Kalman filtering algorithm may be used for time alignment. Examples are not provided in this application.

For example, the sensing information at the moment T0 includes an angular velocity of a Euler angle (row, pitch, yaw), where row is a roll angle, pitch is a pitch angle, and yaw is a yaw angle. After time alignment is performed on the angular velocity of the Euler angle at the moment T0 to obtain an angular velocity of a Euler angle at the moment T1, a vehicle body posture change amount at the moment T2 may be calculated in an integral manner. A Euler angle at the moment T2 meets the following formula:

$$row_{n+1} = row_n + \frac{d\,row}{dt}\,\Delta t \quad \text{Formula (1)}$$

$$pitch_{n+1} = pitch_n + \frac{d\,pitch}{dt}\,\Delta t \quad \text{Formula (2)}$$

$$yaw_{n+1} = yaw_n + \frac{d\,yaw}{dt}\,\Delta t \quad \text{Formula (3)}$$

Herein, n is a moment, for example, n starts from the moment T1, and n+1 represents a next moment. For example, a next moment of the moment T1 is a moment T3 (namely, a point D), and a next moment of the moment T3 is a moment T4 (namely, a point E). In other words, accumulation starts from T1 until a Euler angle at a shake moment (the moment T2) is obtained.

It should be understood that, to more accurately obtain the vehicle body posture change amount at the moment T2, the Euler angle ($row_{T1}$, $pitch_{T1}$, $yaw_{T1}$) at the moment T1 may be set to (0, 0, 0). In this way, ($row_{T2}$, $pitch_{T2}$, $yaw_{T2}$) obtained through accumulation by using the foregoing formula is a vehicle body posture change amount at the moment T2 relative to the moment T1. The vehicle body posture change amount is a vehicle body posture change amount caused by a shake of the vehicle. Therefore, the first location determined based on the vehicle body posture change amount is accurate.

In some other embodiments, impact of a shake of a yaw angle may not be considered. Therefore, a Euler angle is represented as (row, pitch, 0). In other words, the foregoing formula (3) may not be required, and the vehicle body posture change at the moment T2 may be obtained by using the following formula (4) and formula (5):

$$row_{n+1} = row_n + \frac{d\,row}{dt}\,\Delta t \quad \text{Formula (4)}$$

$$pitch_{n+1} = pitch_n + \frac{d\,pitch}{dt}\,\Delta t \quad \text{Formula (5)}$$

After the Euler angle $(row_{T2}, pitch_{T2}, yaw_{T2})$ at the moment T2 is obtained, the first location may be determined based on $(row_{T2}, pitch_{T2}, yaw_{T2})$ at the moment T2. For example, a location compensation matrix is first determined based on $(row_{T2}, pitch_{T2}, yaw_{T2})$ at the moment T2, and then the first location is determined based on the location compensation matrix. For example, $(row_{T2}, pitch_{T2}, yaw_{T2})$ at the moment T2 is $(row_{T2}, pitch_{T2}, 0)$. In other words, impact of the yaw angle on an image shake is not considered, and the location compensation matrix may meet the following:

$$\begin{bmatrix} (R_x R_y)^{-1} & 0 \\ 0 & 1 \end{bmatrix}$$

$R_x$ and $R_y$ satisfy the following:

$$R_x = \begin{bmatrix} \cos row & -\sin row & 0 \\ \sin row & \cos row & 0 \\ 0 & 0 & 1 \end{bmatrix}$$

$$R_y = \begin{bmatrix} 1 & 0 & 0 \\ 0 & \cos pitch & -\sin pitch \\ 0 & \sin pitch & \cos pitch \end{bmatrix}$$

After the location compensation matrix is obtained, the first location is obtained by using the location compensation matrix, and the first location meets the following:

$$\begin{bmatrix} x' \\ y' \\ z' \\ 1 \end{bmatrix} = \begin{bmatrix} (R_x R_y)^{-1} & 0 \\ 0 & 1 \end{bmatrix} \begin{bmatrix} x \\ y \\ z \\ 1 \end{bmatrix}$$

Herein, $\begin{bmatrix} x' \\ y' \\ z' \\ 1 \end{bmatrix}$ is a first location of display information of the target object, and $\begin{bmatrix} x \\ y \\ z \\ 1 \end{bmatrix}$ is an original location of the display information of the target object.

Therefore, based on the display method provided in this embodiment of this application, when the vehicle shakes, the electronic apparatus controls the display apparatus to display the prompt information of the target object at the first location. In this way, a driver sees that the target object in the windshield does not deviate too much from the prompt information of the target object, and does not feel dizziness. This ensures driving safety.

In some other embodiments, when the vehicle shakes, the electronic apparatus may further control the display apparatus to cancel displaying navigation information or reduce transparency of the navigation information. The navigation information includes at least one of a direction indication, a current vehicle speed, a departure place, a destination, and a distance from a current location to the destination. It may be understood that, when the vehicle shakes, if displaying the navigation information is not canceled, a driver may see that a display location of the navigation information in the windshield shakes. Such a shake may block an object in front or cause the driver to feel dizzy. Therefore, when the vehicle shakes, canceling displaying the navigation information or reducing the transparency of the navigation information may alleviate dizziness caused by the shake of the navigation information. This improves driving safety.

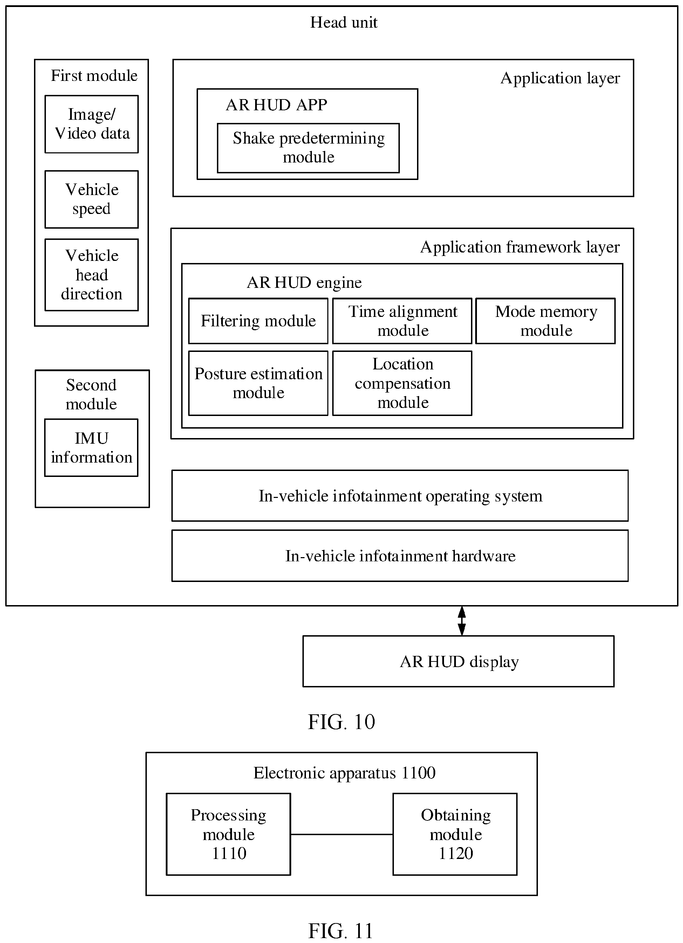

FIG. 10 is a diagram of a structure of an in-vehicle infotainment system according to an embodiment of this application. As shown in FIG. 10, the in-vehicle infotainment system includes a first module, a second module, an application layer, an application framework layer, an in-vehicle infotainment operating system layer, an in-vehicle infotainment hardware layer, and the like. The in-vehicle infotainment system is connected to an AR-HUD display to display AR information.

The first module is configured to collect information such as an image/video, a vehicle speed, and a vehicle head direction. For example, the first module may be a sensor module, for example, an accelerometer, a gyroscope, or an image collection module (for example, a camera), in a vehicle. Alternatively, the first module may be an advanced driving assistance system (Advanced Driving Assistance System, ADAS) in a vehicle. The ADAS is connected to the sensor module, and may be configured to obtain information such as an image/video, a vehicle speed, and a vehicle head direction from the sensor module. Alternatively, the first module may be a domain control unit (Domain Control Unit, DCU) in the vehicle. The DCU is connected to the sensor module, and may be configured to obtain information such as an image/video, a vehicle speed, and a vehicle head direction from the sensor module. The DCU includes at least one of a vehicle control domain controller (Vehicle Domain Controller, VDC), a smart cockpit domain controller (Cockpit Domain Controller, CDC), an intelligent driving domain controller (ADAS/AD Domain Controller, ADC), and a mobile data center (Mobile Data Center, MDC). Alternatively, the first module may be another module in the vehicle. This is not limited in this embodiment of this application.

The second module includes an IMU configured to collect sensing information. For example, the second module may be a sensor module, for example, an accelerometer or a gyroscope, in a vehicle. Alternatively, the second module may be a TBOX in the vehicle. The TBOX is referred to as a remote information processing box or an in-vehicle wireless gateway, and is referred to as a telematics box in English. The TBOX is connected to the sensor module, and may be configured to obtain sensing information from the sensor module. Alternatively, the second module may be an ADAS. The ADAS is connected to the sensor module, and may be configured to obtain sensing information from the sensor module. Alternatively, the second module may be a DCU in the vehicle. The DCU is connected to the sensor module, and may be configured to obtain sensing information from the sensor module. The DCU includes at least one of a VDC, a CDC, an ADC, and an MDC. Alternatively, the second module may be another module in the vehicle. This is not limited in this embodiment of this application.

The second module and the first module may be a same module or different modules. For example, the second module and the first module may be same or different modules integrated on a same component, or the second module and the first module may be modules integrated on different devices; or the second module is a part of the first module, or the first module is a part of the second module.

The AR-HUD may include an AR-HUD application (application, APP), an AR-HUD engine (Engine), and an AR-HUD display.

The AR-HUD application (application, APP) is located at the application layer. The AR-HUD APP may be an APP delivered with the in-vehicle infotainment system, or an APP downloaded by a user in a use process. This is not limited in this application. The AR-HUD APP includes a shake predetermining module, configured to determine whether a shake is to occur.

The AR-HUD engine (Engine) is located in the application framework layer. The AR-HUD engine may be an engine delivered with the in-vehicle infotainment system, or may be an engine downloaded by a user in a use process, for example, an engine downloaded with the AR-HUD APP. The AR-HUD engine includes a filtering module, a time alignment module, a mode memory module, a posture estimation module, and a location compensation module. The filtering module is configured to filter read sensing information. The time alignment module is configured to perform time alignment on the read sensing information (historical sensing information) to obtain sensing information at a current moment. For example, time alignment is performed on the sensing information at the moment T0 to obtain the sensing information at the moment T1. The mode memory module is configured to store a mapping relationship between an obstacle type and a vehicle body posture change amount, and/or a mapping relationship between a geographical location of an obstacle and a vehicle body posture change amount, and the like. The posture estimation module is configured to determine a vehicle body posture based on sensing information. The location compensation module is configured to determine, based on a vehicle body posture change amount, a first location used to display prompt information of a target object.

With reference to FIG. 10, the following describes a processing process of a display method provided in an embodiment of this application.

The first module collects information such as image/video data, a vehicle speed, and a vehicle head direction, and sends the information to the shake predetermining module. The shake predetermining module determines, based on the information, whether a shake is to occur. For example, the shake predetermining module determines, based on the image/video data, whether there is an obstacle on a road ahead, and if determining that there is the obstacle on the road ahead, determines that a shake is to occur. For another example, when the shake predetermining module determines, based on the image/video data, that there is an obstacle on a road ahead, the shake predetermining module determines, based on the vehicle head direction and the vehicle speed, whether a traveling route of the vehicle is to collide with the obstacle, and if determining that the traveling route of the vehicle is to collide with the obstacle, determines that a shake is to occur. For a process of determining, by the shake predetermining module, whether the vehicle is to shake, refer to S0 in the related description in FIG. 4. Specific content is not described again.

When determining that the vehicle is to shake, the shake predetermining module may send an instruction to the AR HUD. For example, an instruction is sent to the AR HUD engine at the application framework layer. In response to the instruction, the AR HUD determines the first location based on the first information, and then controls the display apparatus to display the prompt information of the target object at the first location when the vehicle shakes. The determining, by the AR HUD, the first location based on the first information includes the following two implementations.

Manner 1: The AR HUD obtains the first information. The first information includes road condition information, and the road condition information includes an obstacle type, a size of an obstacle, a geographical location of the obstacle, and the like. For example, the AR HUD obtains an image/video from the first module, determines the obstacle type and the size of the obstacle based on the image/video, and determines the geographical location of the obstacle based on a GPS (not shown in the figure). The AR HUD determines the first location based on the size of the obstacle, or queries, based on the obstacle type, the mode memory module for a vehicle body posture change amount corresponding to the obstacle type, and determines the first location based on the vehicle body posture change amount; or the AR HUD queries, based on a geographical location of the obstacle, the mode memory module for a historical vehicle body posture change amount obtained when the vehicle or another vehicle shakes at the geographical location, and then determines the first location based on the vehicle body posture change amount. For an implementation principle of the manner 1, refer to the description of the case 1 in S2. Details are not described herein again.

Manner 2: The AR HUD obtains the first information. The first information includes traveling state information, and the traveling state information includes sensing information. For example, the AR HUD reads the sensing information such as IMU information from the second module, determines, based on the read sensing information, a vehicle body posture change amount obtained when the vehicle shakes, and determines the first location based on the vehicle body posture change amount.

FIG. 9 is still used as an example. It is assumed that the shake predetermining module predicts that the vehicle is to shake at the moment T1, and the AR HUD starts to read IMU information at the moment TI. Because of a transmission delay, IMU information at the moment T0 is read. The filtering module filters the read IMU information at the T0 moment, for example, filters noise. For example, filtering is performed by using a Butterworth filter, a low-pass filter, or the like.

The time alignment module may be configured to perform time alignment on the filtered IMU information, that is, determine the IMU information at the moment T1 based on the IMU information at the moment T0 and a preset algorithm (for example, a Kalman algorithm). For a time alignment process, refer to the description of the case 2 in S2. Details are not described again. After obtaining the IMU information at the moment T1, the vehicle body posture estimation module determines, based on the IMU information at the moment T1, a vehicle body posture change amount obtained when a shake occurs (that is, at the moment T2). After the vehicle body posture change amount is determined, the location compensation module determines the first location based on the vehicle body posture change amount.

It should be noted that the manner 2 is different from the manner 1. In the manner 1, when the shake predetermining module predicts that the shake is to occur, the mode memory module queries a possible vehicle body posture change amount obtained when the shake occurs, and then determines the first location based on the vehicle body posture change amount. In the manner 2, the IMU information may be directly obtained without a query performed on the mode memory module, the vehicle body posture change amount obtained when the shake occurs is determined based on the IMU information, and then the first location is determined based on the vehicle body posture change amount.

The manner 2 and the manner 1 may be used separately or in combination. For example, the manner 1 and the manner 2 are used in combination. The AR HUD may first perform a query in the manner 1, for example, first perform a query based on the obstacle type, and if the query fails, perform calculation in the manner 2.

FIG. 11 is a diagram of a structure of an electronic apparatus 1100 according to an embodiment of this application. The structure may include a processing module 1110 and an obtaining module 1120. For example, the structure shown in FIG. 11 may be a vehicle-mounted device, or may have a functional component of the electronic apparatus shown in this application.

When the structure is a vehicle-mounted device or another electronic device, the obtaining module 1120 may include an apparatus configured to support a target object collection function, like a camera apparatus and a sensing apparatus, and the processing module 1110 may be a processor, for example, a central processing unit (central processing unit, CPU). The obtaining module 1120 may communicate with the processing module 1110 through a Bluetooth connection, a network connection, or an interface circuit. The processing module 1110 may display road condition information on a display in one of a projection manner, a wired connection manner, or a wireless connection manner. When the structure is a functional component of the electronic apparatus shown in this application, the obtaining module 1120 may include an apparatus configured to support a target object collection function, such as a camera apparatus and a sensing apparatus, and the processing module 1110 may be a processor. The obtaining module 1120 may communicate with the processing module 1110 through an interface circuit. The processing module 1110 may display prompt information of a target object on a display in one of a projection manner, a wired connection manner, or a wireless connection manner. When the structure is a chip or a chip system, the obtaining module 1120 may be one or more of a photographing apparatus or a sensing apparatus controlled by a chip, and the processing module 1110 may be a processor of the chip, and may include one or more central processing units. It should be understood that the processing module 1110 in this embodiment of this application may be implemented by a processor or a processor-related circuit component, and the obtaining module 1120 may be implemented by a camera apparatus, a sensing apparatus, or a related information obtaining apparatus.

For example, the processing module 1110 may be configured to perform all operations except an information obtaining operation performed by the electronic apparatus in any embodiment of this application, for example, predicting that a vehicle is to shake, and controlling, based on the first information, a display apparatus to display prompt information of a target object at a first location in a display area of the display apparatus when the vehicle shakes. The obtaining module 1120 may be configured to perform an information collection operation in any embodiment of this application, for example, obtaining first information, where the first information includes at least one of road condition information for vehicle traveling and traveling state information of a vehicle.

The photographing apparatus in this embodiment of this application may be a monocular camera, a binocular camera, or the like. A photographing area of the photographing apparatus may be an external environment of the vehicle. The sensing apparatus is configured to obtain sensing data of a target object, to assist a processing apparatus in a vehicle in analyzing and determining the sensing information of the target object. For example, the sensing apparatus in this embodiment of this application may include a lidar, a millimeter-wave radar, an ultrasonic radar, and the like that are configured to obtain environment information.

In addition, the processing module 1110 may be a function module. The function module can complete an operation of analyzing collected information and an operation of displaying road condition information on a display. When performing a processing operation, the processing module 1110 may be considered as an analysis module. When performing a display operation, the processing module 1110 may be considered as a display module. For example, the processing module 1110 in this embodiment of this application may be replaced with an AR-HUD. That is, the AR-HUD in this embodiment of this application has a function of the processing module 1110. Alternatively, the processing module 1110 may include two function modules. The processing module 1110 may be considered as a general term of the two function modules. The two function modules are respectively an analysis module and a display module. The analysis module is configured to determine, based on the first information, a first location used to display prompt information of a target object, and the display module is configured to display the prompt information of the target object at the first location obtained by the analysis module through analysis.

In addition, the electronic apparatus in this embodiment of this application may further include a storage module, configured to store one or more programs and data information, where the one or more programs include instructions. The electronic apparatus may further include a display, and the display may be a windshield in a vehicle or a display of another vehicle mounted device.

The electronic apparatus 1100 shown in FIG. 11 may be a transportation means, may be various types of vehicles such as a vehicle and a train, or may be another carrier like a flight vehicle or a mobile platform. When the electronic apparatus 1100 shown in FIG. 11 is a transportation means, for example, a vehicle, the processing module 1110 may be a vehicle mounted apparatus in the vehicle or a processing module in the vehicle mounted apparatus. The vehicle mounted apparatus may be integrated with the vehicle, for example, disposed inside the vehicle; or the vehicle mounted apparatus may be separated from the vehicle, for example, may be implemented in a form of a terminal device (for example, may be vehicle mounted device like an AR-HUD or a head unit). Alternatively, the processing module 1110 may be a processing chip or a processor in a vehicle. The processing chip or the processor may be disposed inside an AR HUD, or may be disposed inside another vehicle mounted apparatus, for example, may be a processor in a head unit.

Alternatively, the electronic apparatus 1100 shown in FIG. 11 may be a vehicle mounted apparatus, and may be integrated with a vehicle, for example, may be disposed inside the vehicle; or may be separated from the vehicle, for example, may be implemented in a form of a terminal device (for example, may be a vehicle mounted device like an AR-HUD or a head unit). When the electronic apparatus 1100 shown in FIG. 11 is a vehicle mounted apparatus, the processing module 1110 may be a processing chip or a processor in the vehicle mounted apparatus.

The electronic apparatus 1100 shown in FIG. 11 may alternatively be a processing apparatus, for example, a processing chip or a processor, and may be disposed inside an AR HUD, or may be disposed inside another vehicle mounted apparatus, for example, may be a processor in a head unit. For example, the electronic apparatus 1100 is disposed inside another vehicle mounted apparatus. The vehicle mounted apparatus may communicate with an AR HUD in a wired or wireless manner. When the electronic apparatus 1100 shown in FIG. 11 is a processing apparatus, the processing module 1110 may be one or more chips or one or more processors in the processing apparatus.

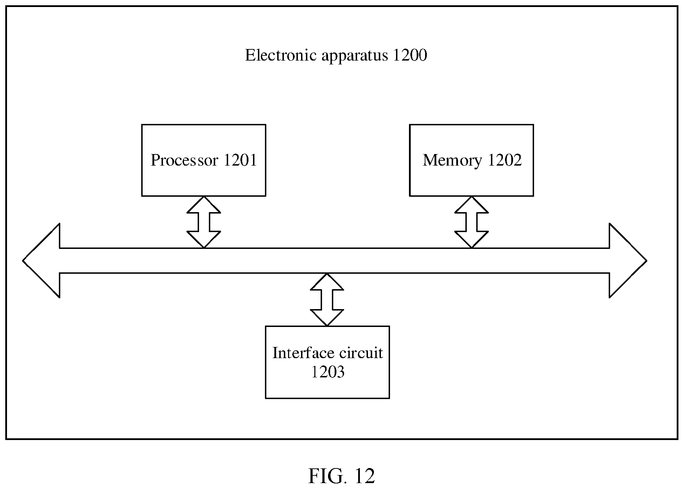

FIG. 12 is a diagram of a structure of another electronic apparatus 1200, configured to perform an action performed by an electronic apparatus according to an embodiment of this application. For ease of understanding and illustration, as shown in FIG. 12, the electronic apparatus 1200 may include a processor 1201, a memory 1202, and an interface circuit 1203. In addition, although not shown in FIG. 12, at least one component of an obtaining apparatus and a display apparatus may be further included in the electronic apparatus 1200. The processor 1201 is mainly configured to implement a processing operation provided in this embodiment of this application, for example, predict whether a vehicle is to shake, and determine, based on first information, a first location used to display prompt information of a target object. The memory 1202 is mainly configured to store a software program and data. The obtaining apparatus may be configured to obtain first information, and may include a camera, a millimeter-wave radar, an ultrasonic sensor, or the like. The interface circuit may be configured to support communication of the electronic apparatus. For example, after obtaining first information, the obtaining apparatus may send the first information to the processor 1201 through the interface circuit. The interface circuit 1203 may include a transceiver or an input/output interface.

It should be understood that, for ease of description, FIG. 12 shows only one memory 1202 and one processor 1201. In an actual electronic apparatus product, there may be one or more processors 1201 and one or more memories 1202. The memory 1202 may also be referred to as a storage medium, a storage device, or the like. The memory 1202 may be disposed independent of the processor 1201, or may be integrated with the processor 1201. This is not limited in this embodiment of this application.

A system architecture and a service scenario described in embodiments of this application are intended to describe technical solutions in embodiments of this application more clearly, and do not constitute a limitation on the technical solutions provided in embodiments of this application. Further, a person of ordinary skill in the art may learn that with evolution of a vehicle architecture and emergence of a new service scenario, the technical solutions provided in embodiments of this application are also applicable to a similar technical problem. It should be understood that FIG. 11 to FIG. 12 are merely simplified diagrams of examples for ease of understanding. The system architecture may further include another device or may further include another unit module.

The electronic apparatus shown in FIG. 12 may be a transportation means, may be various types of vehicles such as a vehicle and a train, or may be another carrier like a flight vehicle or a mobile platform. When the electronic apparatus shown in FIG. 12 is a transportation means, for example, a vehicle, the processor 1201 may be a vehicle mounted apparatus in the vehicle or a processing module in the vehicle mounted apparatus. The vehicle mounted apparatus may be integrated with the vehicle, for example, disposed inside the vehicle; or the vehicle mounted apparatus may be separated from the vehicle, for example, may be implemented in a form of a terminal device (for example, may be vehicle mounted device like an AR-HUD or a head unit). Alternatively, the processor 1201 may be a processing chip or a processor in a vehicle. The processing chip or the processor may be disposed inside an AR HUD, or may be disposed inside another vehicle mounted apparatus, for example, may be a processor in a head unit.

Alternatively, the electronic apparatus shown in FIG. 12 may be a vehicle mounted apparatus, and may be integrated with a vehicle, for example, may be disposed inside the vehicle; or may be separated from the vehicle, for example, may be implemented in a form of a terminal device (for example, may be a vehicle mounted device like an AR-HUD or a head unit). When the electronic apparatus shown in FIG. 12 is a vehicle mounted apparatus, the processor 1201 may be a processing chip or a processor in the vehicle mounted apparatus.

The electronic apparatus shown in FIG. 12 may alternatively be a processing apparatus, for example, a processing chip, and may be disposed inside an AR HUD, or may be disposed inside another vehicle mounted apparatus, for example, may be a processor in a head unit. For example, the electronic apparatus is disposed inside another vehicle mounted apparatus. The vehicle mounted apparatus may communicate with an AR HUD in a wired or wireless manner. When the electronic apparatus shown in FIG. 12 is a processing apparatus, the processor 1201 may be one or more chips or one or more processors in the processing apparatus.

The electronic apparatus shown in FIG. 12 may implement the display method shown in FIG. 4 and the foregoing optional embodiments. The electronic apparatus may include at least one of a processor, a memory, an interface circuit, or a man-machine interaction apparatus. It should be understood that, although FIG. 12 shows only one processor, one memory, one interface circuit, and one (or one type of) collection apparatus, the electronic apparatus may include another quantity of processors and interface circuits.

The interface circuit is configured to connect the electronic apparatus to another component of the terminal or the vehicle, for example, a memory, another processor, or a projection apparatus. The processor may be configured to perform signal interaction with another component through the interface circuit. The interface circuit may be an input/output interface of the processor.

For example, the processor may read, through the interface circuit, computer programs or instructions in a memory coupled to the processor, and decode and execute the computer program or instructions. It should be understood that the computer programs or instructions may include the foregoing function program, or may include a function program of the foregoing electronic apparatus. When a corresponding function program is decoded and executed by the processor, the electronic apparatus may be enabled to implement a solution in the display method provided in embodiments of this application.

Optionally, the function programs are stored in a memory outside the electronic apparatus. In this case, the electronic apparatus may not include the memory. When the foregoing function programs are decoded and executed by the processor, the memory temporarily stores some or all content of the foregoing function programs.

Optionally, the function programs are stored in a memory inside an electronic apparatus. When the memory in the electronic apparatus stores the foregoing function program, the electronic apparatus may be disposed in the electronic apparatus in embodiments of this application.

Optionally, the function programs are stored in an external memory of a road condition electronic apparatus, and other parts of the function programs are stored in an internal memory of the electronic apparatus.

It should be understood that the processor may be a chip. The processor may be a field-programmable gate array (field-programmable gate array, FPGA), an application-specific integrated circuit (application specific integrated circuit, ASIC), a system on chip (system on chip, SoC), or a central processor unit (central processor unit, CPU), a network processor (network processor, NP), a digital signal processor (digital signal processor, DSP), a micro controller unit (micro controller unit, MCU), or a programmable logic device (programmable logic device, PLD) or another integrated chip.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Based on the foregoing content and a same concept, this application provides a computing device, including a processor. The processor is connected to a memory. The memory is configured to store a computer program or instructions. The processor is configured to execute the computer program stored in the memory, so that the computing device performs the method in the foregoing method embodiments.

Based on the foregoing content and a same concept, this application provides a computer-readable storage medium. The computer-readable storage medium stores a computer program or instructions. When the computer program or the instructions are executed, a computing device is enabled to perform the method in the foregoing method embodiments.

Based on the foregoing content and a same concept, this application provides a computer program product. When a computer executes the computer program product, a computing device is enabled to perform the method in the foregoing method embodiments.

Based on the foregoing content and a same concept, this application provides a chip. The chip is connected to a memory, and is configured to read and execute a computer program or instructions stored in the memory, so that a computing device performs the method in the foregoing method embodiment.

Based on the foregoing content and a same concept, an embodiment of this application provides an apparatus. The apparatus includes a processor and an interface circuit. The interface circuit is configured to receive a computer program or instructions and transmit the computer program or the instructions to the processor. The processor runs the computer program or the instructions to perform the method in the foregoing method embodiment.

It should be understood that module division in embodiments of this application is an example, and is only logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

In embodiments of this application, "at least one" means one or more, and "a plurality of" means two or more. In addition, it should be understood that in descriptions of this specification, words such as "first" and "second" are merely intended for purposes of description, and should not be understood as expressing or implying relative importance or a sequence. For example, the first object and the second object do not represent importance or a sequence of the first object and the second object, but are merely used for distinguishing and description. The term "and/or" in embodiments of this application describes only an association relationship and represents that three relationships may exist. For example, A and/or B may represent the following three cases: Only A exists, both A and B exist, and only B exists. In addition, the character "/" in this specification generally indicates an "or" relationship between the associated objects. A description manner like "at least one (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" is used, including a case of a single a, a single b, a single c, a combination of a and b, a combination of a and c, a combination of b and c, or a combination of a, b, and c.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

Reference to "an embodiment", "some embodiments", or the like described in this specification indicates that one or more embodiments of this specification include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A display method, comprising:

    obtaining first information, wherein the first information comprises at least one of road condition information for vehicle traveling and traveling state information of a vehicle; and
    controlling, based on the first information when it is predicted that the vehicle is to shake, a display apparatus of the vehicle to display prompt information of a target object at a first location in a display area of the display apparatus when the vehicle shakes, wherein a distance between the first location and a second location is less than a preset distance, and the second location is a location of the target object in the display area of the display apparatus.

2. The method according to claim 1, wherein the method further comprises:

    before the vehicle shakes, displaying the prompt information at a third location in the display area; and
    the controlling, based on the first information when it is predicted that the vehicle is to shake, a display apparatus of the vehicle to display prompt information of a target object at a first location in a display area of the display apparatus when the vehicle shakes comprises:
    when it is predicted that a shake direction of the vehicle is a first direction, controlling, based on the first information, the display apparatus of the vehicle to display the prompt information at the first location when the vehicle shakes, wherein a direction from the third location to the first location is a second direction, and the second direction is opposite to the first direction.

3. The method according to claim 1, wherein the method further comprises:

    before the vehicle shakes, displaying the prompt information at a fourth location in the display area; and
    the controlling, based on the first information when it is predicted that the vehicle is to shake, a display apparatus of the vehicle to display prompt information of a target object at a first location in a display area of the display apparatus when the vehicle shakes comprises:
    when it is predicted that shake displacement of the vehicle is first displacement, controlling, based on the first information, the display apparatus of the vehicle to display the prompt information at the first location when the vehicle shakes, wherein displacement from the fourth location to the first location is second displacement, and the second displacement is related to the first displacement.

4. The method according to claim 1, wherein the road condition information comprises an obstacle size and/or an obstacle type, and the first location is determined based on the obstacle size and/or the obstacle type.

5. The method according to claim 1, wherein the road condition information comprises a geographical location of an obstacle, the first location is determined based on a first posture change amount, and the first posture change amount is a posture change amount generated by a historical shake of the vehicle or another vehicle at the geographical location.

6. The method according to claim 5, wherein the method further comprises:
    when a quantity of times that the vehicle shakes at a same geographical location is greater than a first preset quantity of times, recording the geographical location and a posture change amount generated by a shake at the geographical location.

7. The method according to claim 1, wherein the traveling state information comprises sensing information at a current moment, the sensing information at the current moment is used to predict a second vehicle body posture change amount generated by a shake of the vehicle, and the first location is determined based on the second vehicle body posture change amount.

8. The method according to claim 7, wherein the sensing information at the current moment is determined based on sensing information at a first moment and first duration, the first moment is earlier than the current moment, and the first duration is a transmission delay for the sensing information at the first moment.

9. The method according to claim 1, wherein the method further comprises:
controlling the display apparatus to cancel displaying navigation information or reduce transparency of the navigation information when the vehicle shakes, wherein the navigation information comprises at least one of a direction indication, a current vehicle speed, a departure place, a destination, and a distance from a current location to the destination.

10. An electronic apparatus, comprising:

an obtaining module, configured to obtain first information, wherein the first information comprises at least one of road condition information for vehicle traveling and traveling state information of a vehicle; and
a processing module, configured to: control, based on the first information when it is predicted that the vehicle is to shake, a display apparatus of the vehicle to display prompt information of a target object at a first location in a display area of the display apparatus when the vehicle shakes, wherein a distance between the first location and a second location is less than a preset distance, and the second location is a location of the target object in the display area of the display apparatus.

11. The apparatus according to claim 10, wherein the processing module is further configured to:

before the vehicle shakes, control the prompt information to be displayed at a third location in the display area; and
when it is predicted that a shake direction of the vehicle is a first direction, control, based on the first information, the display apparatus of the vehicle to display the prompt information at the first location when the vehicle shakes, wherein a direction from the third location to the first location is a second direction, and the second direction is opposite to the first direction.

12. The apparatus according to claim 10, wherein the processing module is further configured to:

before the vehicle shakes, control the prompt information to be displayed at a fourth location in the display area; and
when it is predicted that shake displacement of the vehicle is first displacement, control, based on the first information, the display apparatus of the vehicle to display the prompt information at the first location when the vehicle shakes, wherein displacement from the fourth location to the first location is second displacement, and the second displacement is related to the first displacement.

13. The apparatus according to claim 10, wherein the road condition information comprises an obstacle size and/or an obstacle type, and the first location is determined based on the obstacle size and/or the obstacle type.

14. The apparatus according to claim 10, wherein the road condition information comprises a geographical location of an obstacle, the first location is determined based on a first posture change amount, and the first posture change amount is a posture change amount generated by a historical shake of the vehicle or another vehicle at the geographical location.

15. The apparatus according to claim 14, wherein the processing module is further configured to:
when a quantity of times that the vehicle shakes at a same geographical location is greater than a first preset quantity of times, record the geographical location and a posture change amount generated by a shake at the geographical location.

16. The apparatus according to claim 10, wherein the traveling state information comprises sensing information at a current moment, the sensing information at the current moment is used to predict a second vehicle body posture change amount generated by a shake of the vehicle, and the first location is determined based on the second vehicle body posture change amount.

17. The apparatus according to claim 16, wherein the sensing information at the current moment is determined based on sensing information at a first moment and first duration, the first moment is earlier than the current moment, and the first duration is a transmission delay for the sensing information at the first moment.

**18.** The apparatus according to claim 10, wherein the processing module is further configured to:
control the display apparatus to cancel displaying navigation information or reduce transparency of the navigation information when the vehicle shakes, wherein the navigation information comprises at least one of a direction indication, a current vehicle speed, a departure place, a destination, and a distance from a current location to the destination.

**19.** An electronic apparatus, comprising a processor, wherein the processor is connected to a memory, the memory stores a computer program or instructions, and the processor is configured to execute the computer program or the instructions stored in the memory, so that the computing device performs the method according to any one of claims 1 to 9.

**20.** A computer-readable storage medium, wherein the computer-readable storage medium stores a computer program or instructions, and when the computer program or the instructions are executed by a computing device, the computing device is enabled to perform the method according to any one of claims 1 to 9.

FIG. 1

Vehicle A

Prompt box

Vehicle B

80

65 km/H

(a)

Vehicle A

Prompt box

Vehicle B

80

65 km/H

(b)

FIG. 2

FIG. 3

| |
|---|
| Obtain first information, where the first information includes at least one of road condition information for vehicle traveling and traveling state information of a vehicle |

S1

| |
|---|
| Control, based on the first information when it is predicted that the vehicle is to shake, a display apparatus of the vehicle to display prompt information of a target object at a first location in a display area of the display apparatus when the vehicle shakes, where a distance between the first location and a second location is less than a preset distance, and the second location is a location of the target object in the display area of the display apparatus |

S2

FIG. 4

FIG. 5

FIG. 6

FIG. 7

FIG. 8

EP 4 488 815 A1

It is predicted that a shake is to occur, and
sensing information at the moment T0 is read

**Point**
**C**

**Point**
**B**

**Point**
**D**

**Point**
**E**

**Point A**

T0  T1  T3  T4  T2  Time

FIG. 9

## Head unit

**First module**

- Image/ Video data
- Vehicle speed
- Vehicle head direction

**Second module**

- IMU information

**Application layer**

AR HUD APP

- Shake predetermining module

**Application framework layer**

AR HUD engine

- Filtering module
- Time alignment module
- Mode memory module
- Posture estimation module
- Location compensation module

In-vehicle infotainment operating system

In-vehicle infotainment hardware

AR HUD display

FIG. 10

Electronic apparatus 1100

- Processing module 1110
- Obtaining module 1120

FIG. 11

Electronic apparatus 1200

Processor 1201

Memory 1202

Interface circuit
1203

FIG. 12

| INTERNATIONAL SEARCH REPORT | International application No. |
|---|---|
| | **PCT/CN2022/143818** |

**A. CLASSIFICATION OF SUBJECT MATTER**

G06F3/14(2006.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 车辆, 驾驶, 路况, 状态, 抖动, 预测, 显示, 提示信息, vehicle, drive, road condition, state, vibration, forecast, display, prompt information

**C. DOCUMENTS CONSIDERED TO BE RELEVANT**

| Category* | Citation of document, with indication, where appropriate, of the relevant passages | Relevant to claim No. |
|---|---|---|
| PX | CN 114398120 A (GUANGDONG OPPO MOBILE COMMUNICATIONS CO., LTD.) 26 April 2022 (2022-04-26) description, paragraphs 31-177 | 1-20 |
| X | WO 2021166801 A1 (SONY GROUP CORP.) 26 August 2021 (2021-08-26) description, paragraphs 6-236 | 1-20 |
| A | CN 114179726 A (ZHEJIANG GEELY AUTOMOBILE HOLDINGS LIMITED et al.) 15 March 2022 (2022-03-15) entire document | 1-20 |
| A | CN 109584596 A (CHERY AUTOMOBILE CO., LTD.) 05 April 2019 (2019-04-05) entire document | 1-20 |
| A | US 2020361489 A1 (RIDEFLUX INC.) 19 November 2020 (2020-11-19) entire document | 1-20 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 February 2023** | **06 March 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/143818**

| Patent document cited in search report | | | Publication date (day/month/year) | Patent family member(s) | | | Publication date (day/month/year) |
|---|---|---|---|---|---|---|---|
| CN | 114398120 | A | 26 April 2022 | None | | | |
| WO | 2021166801 | A1 | 26 August 2021 | CN | 115087566 | A | 20 September 2022 |
| CN | 114179726 | A | 15 March 2022 | None | | | |
| CN | 109584596 | A | 05 April 2019 | WO | 2020125178 | A1 | 25 June 2020 |
| US | 2020361489 | A1 | 19 November 2020 | KR | 102061750 | B1 | 03 January 2020 |
| | | | | US | 2020361489 | A1 | 19 November 2020 |
| | | | | KR | 20200132652 | A | 25 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210322292